# EUROPÄISCHE PATENTANMELDUNG

(11) **EP 3 695 896 A1**
(43) Veröffentlichungstag der Anmeldung: **19.08.2020**
(21) Anmeldenummer: 20155740.2
(22) Anmeldetag: 05.02.2020
(51) Int. Cl.: B01D 53/04

(54) **VERFAHREN UND VORRICHTUNG ZUR REINIGUNG SCHWEFELOXIDHALTIGER ABGASE AUS BRENNKRAFTMASCHINEN MITTELS EINES MEHRSTUFIGEN ADSORPTIONSVERFAHRENS**

(30) Priorität: 14.02.2019 DE 102019103741
(71) Anmelder: Primarine GmbH, 21244 Buchholz i.d.N. (DE)
(72) Erfinder: Jürgens, Ralf, 24558 Henstedt-Ulzburg (DE)
(74) Vertreter: Jaeschke, Rainer

(57) **Zusammenfassung**

Die Erfindung betrifft ein Verfahren und eine Vorrichtung zur Reinigung von Schadstoffen aus einem Abgasstrom einer mit einem schwefelhaltigen Brennstoff betriebenen Brennkraftmaschine, insbesondere einer mit Schweröl betriebenen Schiffsbrennkraftmaschine. Gemäß der Erfindung wird vorgeschlagen, dass der Abgasstrom in einer ersten Stufe mit einem festen Adsorbtionsmittel des Adsorbers in Kontakt tritt, in der insbesondere saure Schadstoffe, umfassend Schwefeldioxid und Schwefeltrioxid gebunden werden, dass der Abgasstrom anschließend durch eine zweite Stufe des Adsorbers geleitet wird, in dem die Feinreinigung des Abgasstroms erfolgt, und dass das Adsorbtionsmittel der zweiten Stufe als Adsorbtionsmittel in der ersten Stufe verwendet wird.

## Beschreibung

Die Erfindung betrifft ein Verfahren und eine Vorrichtung zur Reinigung von Schadstoffen aus einem Abgasstrom einer mit einem schwefelhaltigen Brennstoff betriebenen Brennkraftmaschine, insbesondere einer mit Schweröl betriebenen Schiffsbrennkraftmaschine. Bei der Brennkraftmaschine kann es sich auch um eine hochdruckaufgeladene Brennkraftmaschine handeln. Es wird im Folgenden überwiegend von Brennkraftmaschinen gesprochen, ohne dass dadurch eine Beschränkung verbunden sein soll.

Nach dem Stand der Technik werden Brennkraftmaschinen mit verschiedenen Abgasnachbehandlungssystemen ausgestattet, um Schadstoffemissionen zu reduzieren. Die wesentlichen Schadstoffe aus dem Abgas von an Bord von Schiffen betriebenen Brennkraftmaschinen sind Stickoxide (NOₓ), Schwefeldioxid (SO₂), Schwefeltrioxid (SO₃), Kohlenmonoxid (CO), Kohlendioxid (CO₂), unverbrannte Kohlenwasserstoffe (HC), wie Paraffine, Aldehyde, Olefine, Aromaten sowie Rußpartikel, die den Kohlenstoff sowohl als Feststoff als auch in Form der sogenannten "Volatile Organic Compounds" (VOC) enthalten. Des Weiteren gehören Feinstaubpartikel dazu, die entsprechend ihrer Partikelgröße als "PM2,5" und "PM10" bekannt sind. Ferner sind Schwermetalle wie Vanadium, Nickel, Blei, Zink und Cadmium sowie Aluminium, Magnesium, Kobalt und Silizium enthalten.

Bei den Schiffsbrennkraftmaschinen handelt es sich um langsam drehende 2-Takt-Motoren, die mit Schwerölen der Qualitäten IFO 180 (Intermediate Fuel Oil), IFO 380, MDO (Marine Diesel Oil) und MGO (Marine Gas Oil) betrieben werden. Auch können diese Schiffsbrennkraftmaschinen als 4-Takt-Motoren ausgebildet sein, die mit den gleichen Schwerölen betrieben werden. Kraftstoffe für PKW (Personenkraftwagen) und LKW (Lastkraftwagen) enthalten heutzutage Schwefelgehalte von 10 ppm bis 50 ppm, während Brennstoffe für Schiffsbrennkraftmaschinen, z.B. das Heavy Fuel Oil (HFO), üblicherweise einen Anteil von organisch gebundenen Schwefel haben, der um einen Faktor von bis zu 1.000 höher liegt und 4,5 Vol.-% erreichen kann. Zudem enthalten in Schiffsmotoren verwendete Schweröle hohe Anteile an Schwermetallen im Milligrammbereich pro Liter Brennstoff.

Ungefähr 90% des weltweiten Frachtaufkommens wird mit Schiffen bewegt, die von großen, mit Rückstandsölen befeuerten Motoren angetrieben werden. Dabei werden mehr als 350 Millionen Tonnen Treibstoff verbrannt, was für Emissionen in Form von Schwefeloxiden, Stickoxiden und Partikeln führt. Es gilt, diese Belastungen der Umwelt zu reduzieren und zu minimieren.

Die Internationale Maritime Organisation (IMO) hat im Oktober 2008 den Annex VI des MARPOL-Abkommens modifiziert mit dem Ziel, genau diese Emissionen zu reduzieren (MARPOL = International Convention for the Prevention of Marine Pollution from Ships). Hierbei wurde der Fokus auf Stickoxide (NOₓ), Schwefeloxide (SOₓ) und Partikel (PM) gelegt. Die seit dem 1. Januar 2010 gültige EU-Direktive 2005/33 schreibt für Schiffe, die länger als zwei Stunden im Hafen manövrieren oder an der Pier liegen, die Verwendung von Treibstoff mit weniger als 0,1% Schwefel vor. Dieser Grenzwert wurde auch vom California Air Resources Board (CARB) ab dem 1. Januar 2010 in den kalifornischen Häfen eingeführt und wird seit 2012 auf eine 24-Meilenzone ausgedehnt.

Alle Vorschriften (MARPOL Annex VI, EU-Direktive 2005/33, CARB 1 und CARB 2) lassen alternativ zur Verwendung von schwefelreduzierten Treibstoff auch den Betrieb von Abgasbehandlungsanlagen an Bord zu, sofern diese in der Lage sind, einen Emissionsäquivalenzwert zu erreichen, der der Verwendung von schwefelreduziertem Treibstoff entspricht.

Bei der Verbrennung fossiler Brennstoffe kommt es zur Bildung von Schadstoffen während des Verbrennungsvorgangs oder im Abgasstrom. Der in Schiffsmotoren eingesetzte Brennstoff HFO (Heavy Fuel Oil) ist ein Rückstandsprodukt aus dem Raffinationsprozess der Mineralölindustrie und enthält je nach Herkunft unterschiedliche Mengen an Schwefel, Vanadium, Cadmium, Blei und anderen Schwermetallen. Der Schwefelgehalt schwankt stark je nach Herkunftsland. Der durchschnittliche Schwefelgehalt der weltweit eingesetzten Brennstoffe liegt derzeit bei etwa 2,7 Gew.-%. Während des Verbrennungsvorgangs im Motor reagiert der an verschiedenen Kohlenwasserstoff gebundene Schwefel mit Sauerstoff zu SO₂ (ca. 95%) und SO₃ (ca. 5%).

Des Weiteren werden Stickoxide (NO und NO₂) in hohen Konzentrationen während des Verbrennungsvorgangs gebildet. Anders als an Land, wo Emissionsgrenzwerte für die verschiedensten Emissionsquellen wie Kohlekraftwerke, Müllverbrennungsanlagen, Stahl- und Zementwerke, aber auch für LKW und PKW, schon vor vielen Jahren in Kraft gesetzt wurden, sind die Grenzwerte für die Schifffahrt erst kürzlich verabschiedet worden. Während der MEPC 58 (Marine Environment Protection Committee) im Oktober 2008 ist die stufenweise Absenkung der Schwefelgehalte im Treibstoff als Resolution im EPC.176 beschlossen worden. Alternativ ist der Betrieb von Abgasnachbehandlungsanlagen zugelassen worden.

Es werden bereits verschiedene Abgasnachbehandlungsverfahren zur Reinigung von Abgasen aus Brennkraftmaschinen an Bord von Schiffen eingesetzt. Die WO 2009/149603 A schlägt ein Abgaswäscheverfahren vor, ebenso wie die CN 000102371101A und die WO 2007/054615 A. Gemeinsam ist allen Verfahren die Nutzung von Seewasser zur Abscheidung der SOₓ-Emissionen. Die WO 2010/026018 A schlägt ein trockenes Entschwefelungsverfahren vor, bei dem ein an Bord mitzuführendes Granulat aus Kalziumhydroxid für die Entschwefelung eingesetzt wird. Die DE 10 2010 017 563 A1 beschreibt ein mehrstufiges Verfahren, in dem jede Stufe eine diskrete Reaktoreinheit vorsieht und somit aus mehreren hintereinander geschalteten Reaktoren besteht, die auch unabhängig voneinander betrieben werden können.

Der Nachteil der zuvor genannten Verfahren ist, dass diese bei hohen Abscheidegraden von mehr als 95% einen exponentiellen Anstieg des Sorptionsmittelverbrauchs aufweisen und bei Schwefelgehalten von mehr als 2% m/m (Massenanteil der Mischungskomponente) im Treibstoff das Bauvolumen und das Gewicht ebenfalls exponentiell größer werden, so dass diese Verfahren aus Platz- und Kostengründen wirtschaftlich nicht an Bord eines Schiffes betrieben werden können.

Der Erfindung liegt die Aufgabe zugrunde, ein Abgasnachbehandlungsverfahren zur Reinigung von Abgasen aus Schiffsbrennkraftmaschinen zu schaffen, das an Bord eines Schiffs betrieben werden kann und durch das die geforderten Emissionsgrenzwerte eingehalten werden können.

Die Aufgabe wird gemäß der Erfindung dadurch gelöst, dass der Abgasstrom in einer ersten Stufe mit einem festen Adsorptionsmittel des Adsorbers in Kontakt tritt, in der insbesondere saure Schadstoffe, umfassend Schwefeldioxid und Schwefeltrioxid gebunden werden, dass der Abgasstrom anschließend durch eine zweite Stufe des Adsorbers geleitet wird, in dem die Feinreinigung des Abgasstroms erfolgt, und dass das Adsorptionsmittel der zweiten Stufe als Adsorptionsmittel in der ersten Stufe verwendet wird. Durch dieses Verfahren wird ermöglicht, die geforderten Emissionsgrenzwerte auch bei hohen SOₓ-Konzentrationen mit geringem Adsorptionsmittelverbrauch auf wirtschaftliche Art und Weise einzuhalten. In der ersten Stufe erfolgt eine hohe Beladung des Adsorptionsmittels mit den Schadstoffen, während in der zweiten Stufe des Verfahrens die Feinreinigung mit noch unbelasteten Adsorbtionsmittel erfolgt, durch die der geforderte Emissionsgrenzwert eingehalten werden kann.

Es ist vorstehend überwiegend von der Adsorption gesprochen worden. Tatsächlich handelt es sich hier um eine Adsorption und eine Absorption. Das granulatförmige Adsorptionsmittel weist ein Porensystem aus Mikro-, Meso- und Makroporen auf, in denen zunächst eine Adsorption erfolgt. Im Inneren des Granulats findet dann eher eine Absorption statt. Es wird im Folgenden daher von einer Adsorption gesprochen, wobei hier auch eine Absorption im Inneren des Granulats zu verstehen ist.

Zum Stand der Technik in der Rauchgasreinigung gehören verschiedene Adsorber- und Absorberausführungen, wie z.B. Festbettadsorber, Wanderbettadsorber oder Wirbelbettadsorber. Mit Blick auf die Strömungsrichtung des Rauchgases werden diese Adsorberausführungen als Kreuzstromreaktor, Querstromreaktor oder als Gegenstromreaktor betrieben. Der hier zum Einsatz kommende Adsorber kann als Querstromreaktor ausgeführt sein. Das eingesetzte Adsorptionsmittel besteht aus einem Granulat, welches in verschiedenen Massenanteilen Kalziumhydroxid, Kalziumkarbonat, Natriumkarbonat und/oder Natriumhydrogenkarbonat enthält. Das Adsorptionsmittel kann als Wanderschicht mit kontinuierlichem oder diskontinuierlichem Austrag durch den Adsorber fließen. Das als Granulat geformte Adsorptionsmittel kann eine kubische oder sphärische oder eine splitterartige Form mit einer Korngröße zwischen 1,0 mm und 15,0 mm und bevorzugt zwischen 2,0 und 10,00 mm und insbesondere bevorzugt zwischen 2,0 und 6,0 mm aufweisen.

Weiterhin kann vorgesehen werden, dass das feste Adsorbens ein kohlenstoffhaltiges Additiv, insbesondere Aktivkohle und/oder Herdofenkoks, enthält, insbesondere mit einem Anteil von 0,1 Gew.-% bis 50 Gew.-%, vorzugsweise von 1,0 Gew.-% bis 35 Gew.-%. Hierdurch wird die Reinigung des Abgases weiter unterstützt. In einer im Adsorber stattfindenden chemischen Reaktion (Chemiesorption) werden die sauren Abgase und insbesondere Stickoxide gebunden und in weniger toxische Produkte umgewandelt.

Das frische und nicht beaufschlagte Granulat wird aus einem nicht näher beschriebenen Vorratssilo in den Adsorber gefördert und nach Durchfließen des Adsorbers in einem nicht näher beschriebenen Reststoffsilo aufgefangen und zwischengelagert. Das Adsorbens kann im Hafen aus dem Zwischenlager entfernt werden.

Es ist günstig, wenn der Abgasstrom bei Eintritt in die erste Stufe des Adsorbers eine Temperatur zwischen 150°C und 450°C aufweist. Hier findet die Chemiesorption unter günstigen Bedingungen statt.

Das Adsorptionsmittel kann kontinuierlich zunächst durch die zweite und anschließend durch die erste Stufe des Adsorbers geführt werden. Auch ist es möglich, dass das Adsorptionsmittel diskontinuierlich zunächst durch die zweite und anschließend durch die erste Stufe des Adsorbers geführt wird. In beiden Fällen wird erreicht, dass das unbelastete und frische Adsorbens für die chemische Sorption in der zweiten Stufe für die Feinreinigung des Abgases zur Verfügung steht. In der ersten Stufe wird das in der zweiten Stufe nur gering belastete Adsorbens zur Vorreinigung des Abgases verwendet.

Bei einer diskontinuierlichen Beschickung des Adsorbers kann vorgesehen werden, dass bei der Erneuerung des Granulats eine Menge unbelasteten Granulats der zweiten Stufe zugeführt wird, die mindestens der Menge des Granulats der ersten Stufe entspricht. Es kann vorgesehen werden, dass in der ersten und zweiten Stufe die gleiche Menge Adsorptionsmittel vorhanden ist. Es wird hierdurch erreicht, dass die gleiche Menge des gering belasteten Adsorptionsmittel zur Vorreinigung des Abgases in die erste Stufe geleitet wird, in der es dann weiter beaufschlagt wird. Es wird insbesondere sichergestellt, dass kein Granulat nur wenig belastet wird. Der Adsorptionsmittelverbrauch kann dadurch gering gehalten werden.

Die Verweilzeit des Granulats im Adsorber kann durch die Austragsmenge und Austragsgeschwindigkeit der Austragsorgane für das Adsorptionsmittel eingestellt werden. Hier können Zellenradschleusen eingesetzt werden.

Die Vorrichtung zur Reinigung von Schadstoffen aus einem Abgasstrom weist ein Abgasrohr auf, das von dem Abgas der Brennkraftmaschine durchströmt wird. Es ist vorgesehen, dass in dem Abgasrohr wenigstens eine Absperrklappe vorhanden ist, dass die Abgasrohrwandung in einem ersten Bereich in Strömungsrichtung vor der Absperrklappe unter Bildung einer ersten Adsorptionsstufe und in einem zweiten Bereich in Strömungsrichtung hinter der Absperrklappe unter Bildung einer zweiten Adsorptionsstufe perforiert ist, dass die perforierten Bereiche von einem durchgängigen Adsorbenskanal überdeckt sind, und dass der Adsorbenskanal von einem Strömungskanal überdeckt ist, dessen innere und den Adsorbenskanal begrenzende Wandung perforiert ist. Hierdurch wird ein Strömungsweg für das Abgas bereitgestellt derart, dass das Abgas bei geschlossener Absperrklappe durch die Perforierung im ersten Bereich nach außen durch den Adsorbenskanal in den Strömungskanal und von dort nach innen durch den Adsorbenskanal und durch die Perforierung im zweiten Bereich zurück in das Abgasrohr in Strömungsrichtung hinter der Absperrklappe geleitet wird. Der Adsorbenskanal ist mit dem Adsorptionsmittel gefüllt. Es entsteht eine Zwangsströmung des Abgases durch das Adsorptionsmittel, so dass die Reinigung des Abgases erfolgen kann.

Das Abgasrohr der Vorrichtung der Erfindung ist hierbei in der Regel das bereits vorhandene Abgasrohr der Brennkraftmaschine, das entsprechend bearbeitet worden ist. Die Vorrichtung kann somit auch nachträglich montiert werden. Es kann aber auch vorgesehen werden, dass ein entsprechend vorbereiteter Rohrabschnitt bereits beim Einbau des Abgasrohrs in das Schiff montiert wird.

Es kann weiterhin vorgesehen werden, dass das Abgasrohr in der die Absperrklappe aufweisenden Zone zwischen der ersten und zweiten Stufe nicht perforiert ist. Grundsätzlich können sich die erste und zweite Stufe auch unmittelbar hintereinander anschließen. Durch das Vorsehen einer nicht perforierten Zone zwischen der ersten und zweiten Stufe werden jedoch Kurzschlussströme des Abgases vermieden.

Weiterhin kann vorgesehen werden, dass die Außenwandung des Adsorbenskanals, die der Innenwandung des Strömungskanals entspricht, in dem der nicht perforierten Zone des Abgasrohrs entsprechenden Zone ebenfalls nicht perforiert ist. Auch hierdurch wird die gewünschte Strömung des Abgases durch die dadurch getrennten und beabstandeten beiden Stufen des Adsorbers begünstigt.

Gemäß einer bevorzugten Ausführungsform ist vorgesehen, dass der erste und zweite Bereich des Abgasrohrs entlang dessen Umfangs und in axialer Richtung perforiert sind und dass der Adsorbenskanal und der Strömungskanal die beiden Bereiche hülsenförmig umgeben. Der Adsorber umgibt demnach das Abgasrohr manschettenförmig, wodurch sich ein platzsparender Aufbau der Abgasnachbehandlung ergibt.

Insbesondere kann vorgesehen werden, dass die beiden Bereiche und die Absperrklappe in einem vertikal verlaufenden Abschnitt des Abgasrohrs angeordnet sind, und dass der Adsorbenskanal von oben mit einem Adsorptionsmittel befüllbar ist und auf seiner unteren Seite wenigstens ein Austragsorgan für das verbrauchte Adsorptionsmittel aufweist derart, dass das Adsorptionsmittel aufgrund der Schwerkraft durch den Adsorbenskanal transportiert wird. Durch diese Anordnung kann auf ein Fördermittel des Adsorptionsmittels durch den Adsorbenskanal verzichtet werden. Insbesondere bei einem Schiff befindet sich die Brennkraftmaschine in der Regel im unteren Bereich des Schiffes. Das Abgasrohr verläuft demnach von unten nach oben durch den gesamten Schiffsrumpf, so dass an mehreren Stellen ausreichend Platz für die manschettenförmige Adsorptionsvorrichtung vorhanden ist.

Weiterhin kann vorgesehen werden, dass die die ersten und zweiten Bereiche des Abgasrohrs umgebenden Volumen des Adsorbenskanals im Wesentlichen gleich groß sind. Hierdurch wird erreicht, dass in der so gebildeten ersten und zweiten Stufe die gleiche Menge Adsorptionsmittel vorhanden ist.

Das Austragsorgan am unteren Ende des Adsorptionskanals kann als Zellenradschleuse ausgebildet sein. Diese Art eines Materialaustrags hat sich bewährt.

Gemäß einer weiteren Ausführungsform der Erfindung ist vorgesehen, dass in Strömungsrichtung zwischen dem ersten und zweiten Bereich zwei Absperrklappen vorhanden sind, die unter Bildung eines Bypasses geöffnet werden können. Hierdurch kann der Schiffsbetrieb aufrechterhalten werden, auch wenn der Adsorbenskanal beispielsweise verstopft ist. Auch kann das Schiff dann ohne eine Abgasnachbehandlung betrieben werden, beispielsweise wenn ein schadstoffarmer Brennstoff verbrannt wird oder auf hoher See.

Die vorgeschlagene Bauform des Adsorbers ist platzsparend und kann daher in vorteilhafter Weise auf Schiffen mit nur begrenztem Raumkapazitäten für eine Abgasnachbehandlungsanlage eingesetzt werden. Ein weiterer Vorteil ist darin zu sehen, dass eine derartige Anordnung des Adsorbers auch nachträglich in einem Schiff integriert werden kann. Es ist lediglich eine ausreichend lange freie Länge des Abgasrohrs erforderlich, entlang derer der Adsorber gemäß der Erfindung montiert werden kann. Da sich stets nur eine vergleichsweise geringe Menge Adsorptionsmittel im Adsorbenskanal befindet, wird die Stabilität und die Trimmung des Schiffes nicht beeinträchtigt.

Durch das Vorsehen von verschließbaren Absperrklappen im Abgasrohr ist es möglich, die vom Motor kommenden Abgase auch ungereinigt abzugeben, beispielsweise wenn ein schadstoffarmer Treibstoff verbrannt wird, bei dem eine Entschwefelung oder Entstickung nicht erforderlich ist. Auch kann durch den Bypass vermieden werden, dass bei einem unzulässigen Anstieg des Abgasgegendrucks im Adsorber die Motorleistung beeinträchtigt wird.

Die Erfindung wird im Folgenden anhand der schematischen Zeichnung näher erläutert. Es zeigen:

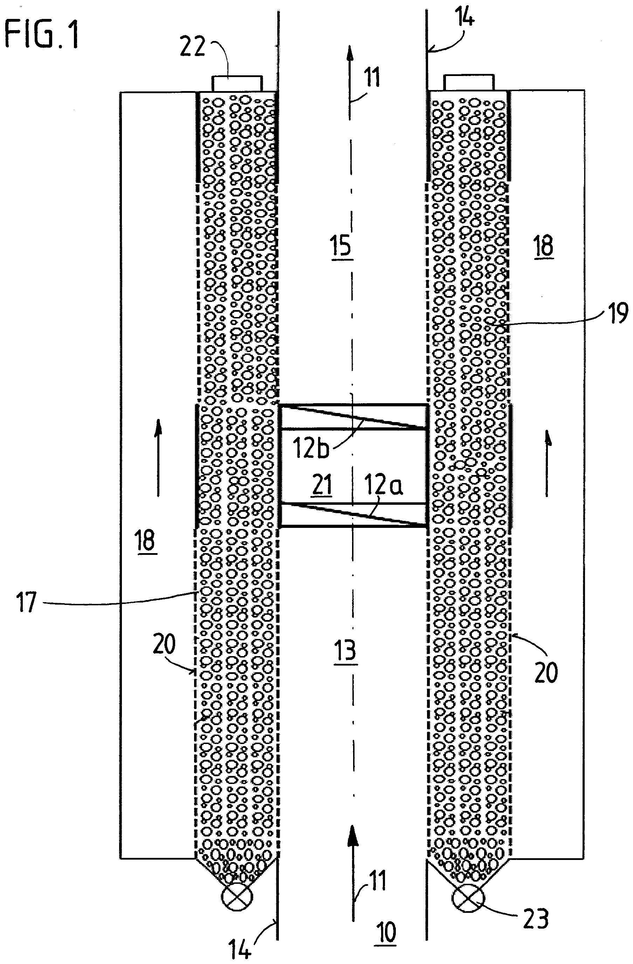

- Fig. 1: Den Längsschnitt durch ein Abgasrohr mit einem Adsorber gemäß der Erfindung und
- Fig. 2: Den Strömungsverlauf des Abgases durch den Adsorber gemäß der Erfindung.

Die in der Zeichnung dargestellte Abgasanlage umfasst ein Abgasrohr 10, durch das das in der nicht gezeigten Brennkraftanlage erzeugte Abgas in der Hauptströmungsrichtung 11 strömt. Das Abgasrohr 10 verläuft zumindest in einem Teilabschnitt vertikal beispielsweise durch einen ebenfalls nicht gezeigten Schiffsrumpf.

Im Abgasrohr 10 sind zwei in Strömungsrichtung 11 hintereinander liegende Absperrklappen 12 a, b vorhanden, durch die das Abgasrohr verschlossen werden kann. In einem in Strömungsrichtung vor der vorderen Absperrklappen 12 a liegenden ersten Bereich 13 ist die Wandung 14 des Abgasrohrs perforiert ausgebildet. In einem in Strömungsrichtung 11 hinter der hinteren Absperrklappe 12 b liegenden zweiten Bereich 15 ist die dortige Wandung des Abgasrohrs 10 ebenfalls perforiert ausgebildet. Die Perforationen erstrecken sich über eine vorgebbare Länge des Abgasrohrs in Strömungsrichtung 11 und um den gesamten Umfang des Abgasrohrs in dem ersten und zweiten Bereich.

Die beiden in Strömungsrichtung hintereinander liegenden Bereiche 13, 15 werden von einem hülsenförmigen Adsorbenskanal 17 umgeben. Dieser Adsorbenskanal 17 wird seinerseits von einem im Querschnitt ringförmigen Strömungskanal 18 umgeben. Im Einzelnen ist die Anordnung so getroffen, dass der Adsorbenskanal 17 von oben nach unten durchlässig ist und mit einem granulatförmigen Adsorptionsmittel 19 befüllt ist. Die Wandung 20 zwischen dem Adsorptionskanal 17 und dem äußeren Strömungskanal 18 ist in denjenigen Bereichen entlang dem Umfang perforiert ausgebildet, die dem ersten und zweiten Bereich 13, 15 gegenüberliegen. In der Zone 21, in der die Absperrklappen 12 a, b angeordnet sind, sind die Wandungen nicht perforiert.

Durch diese Anordnung wird mit einfachen Mitteln ein zweistufiger Adsorber bereitgestellt. Das Abgas strömt durch das Abgasrohr 10 und wird bei geschlossenen Absperrklappen 12 a, b durch den Adsorberkanal 17 geleitet. Das Adsorptionsmittel wird dabei quer zur Strömungsrichtung durchströmt. Anschließend gelangt das Abgas durch die Perforation in der Außenwandung 20 des Adsorptionskanals 17 in den Strömungskanal 18 und strömt durch die in Strömungsrichtung 11 weiter hinten liegende Perforation durch das weiter oben liegende frische Adsorptionsmittel 19 zurück in das Abgasrohr in Strömungsrichtung hinter der hinteren Absperrklappe 12 b. Der erste Bereich 13 vor der ersten Absperrklappe 12 a bildet somit eine erste Adsorptionsstufe, während der zweite Bereich 15 hinter der zweiten Absperrklappe 12 b eine zweite Adsorptionsstufe bildet.

Das Adsorptionsmittel wird durch Einfüllöffnungen 22 am oberen Ende des im Querschnitt ringförmigen Adsorptionskanals 17 in diesen eingefüllt. Es wandert aufgrund der Schwerkraft nach unten und wird am unteren Ende durch Austragungsorgane 23, die als Zellenradschleusen ausgebildet sein können, wieder aus dem Adsorptionskanal 17 entfernt. Im oberen Bereich unmittelbar hinter der Einfüllöffnung 22 kann der Adsorptionskanal 17 entlangdem Umfang nicht perforiert und somit geschlossen ausgebildet sein, um ein Durchströmen des Befüllbereichs mit Abgas zu verhindern.

Die Lochgröße der perforierten Abschnitte der entsprechenden Wandungen 14, 20 ist so bemessen, dass das granulatförmige Adsorptionsmittel 19 sicher in dem Adsorptionskanal gehalten ist. Es kann beispielsweise eine Lochgröße von 1,0 mm bis 3,0 mm vorgesehen werden.

Das Adsorptionsmittel 19 durchwandert demnach den Adsorptionskanal 17 kontinuierlich oder diskontinuierlich von oben nach unten, während das Abgas zunächst das Adsorptionsmittel 19 von unten in dem ersten Bereich 13 und anschließend im oberen, zweiten Bereich 15 durchströmt. Hierdurch wird eine zweistufige Ausführung des Adsorbers erreicht, wobei in der in Strömungsrichtung vorne liegenden ersten Stufe 13 eine Vorreinigung des Abgases erfolgt und im in Strömungsrichtung dahinter liegenden zweiten Bereich 15 eine Feinreinigung des Abgases erfolgt. Die Anordnung ist äußerst platzsparend und kann auch nachträglich in Schiffsbauten integriert werden.

Die Befüllung des Adsorbers mit dem Adsorptionsmittel kann beispielsweise durch eine nicht dargestellte pneumatische Fördereinrichtung erfolgen, durch die auch eine Entleerung des Adsorbers erfolgen kann.

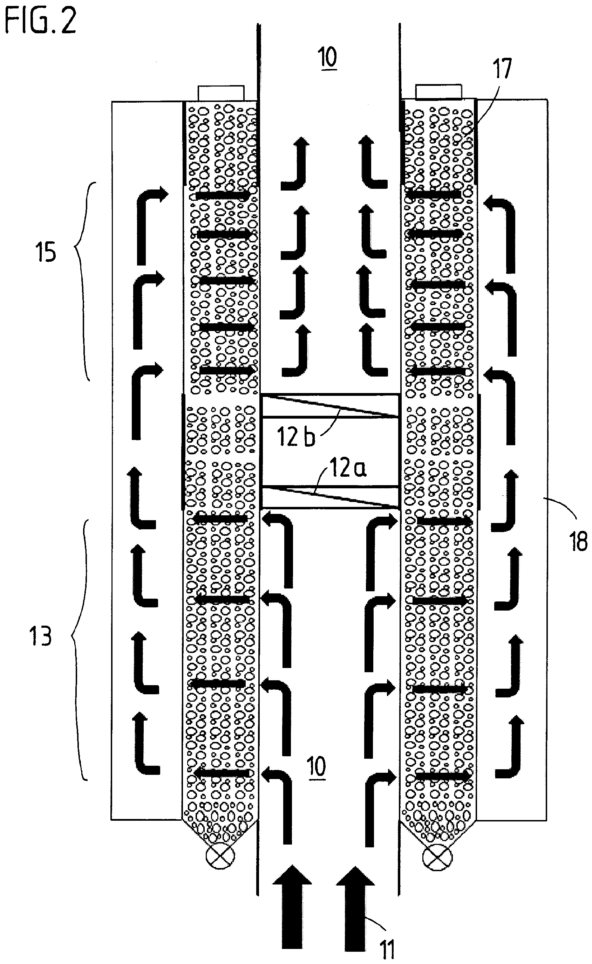

Insgesamt ergibt sich der in Fig. 2 schematisch dargestellte Strömungsverlauf des Abgases. Im Falle eines zu hohen Druckanstiegs in dem Adsorberkanal 17 können die Absperrklappen 12 a, b ganz oder teilweise geöffnet werden. Das Abgas wird dann ohne oder nur mit einer teilweisen Reinigung in die Umwelt abgegeben. Die Absperrklappen 12 a, b können auch je nach Art des verwendeten Treibstoffs geöffnet oder geschlossen werden. Diese Maßnahmen sind leicht und ohne weiteres vom Schiffspersonal durchführbar und können dem jeweils eingesetzten Brennstoff angepasst werden.

Das granulatförmige Adsorptionsmittel wird aufgrund des zweistufigen Verfahrens nahezu vollständig mit den Schadstoffen beaufschlagt. Dabei steht für die Feinreinigung stets ein frisches und unbelastetes Adsorptionsmittel zur Verfügung, so dass die gewünschten Emissionsrichtwerte eingehalten werden können. Am Ausgang des Adsorptionskanals 17 wird nur gesättigtes Adsorptionsmittel abgezogen, so dass sich ein sparsamer Verbrauch ergibt. Die mitzuführende Menge an Adsorptionsmittel kann daher gering gehalten werden.

## Patentansprüche

1. Verfahren zur Reinigung von Schadstoffen aus einem Abgasstrom einer mit einem schwefelhaltigen Brennstoff betriebenen Brennkraftmaschine, insbesondere einer mit Schweröl betriebenen Schiffsbrennkraftmaschine, **dadurch gekennzeichnet, dass** der Abgasstrom in einer ersten Stufe (13) mit einem festen Adsorbtionsmittel (19) des Adsorbers in Kontakt tritt, in der insbesondere saure Schadstoffe, umfassend Schwefeldioxid und Schwefeltrioxid gebunden werden, dass der Abgasstrom anschließend durch eine zweite Stufe (15) des Adsorbers geleitet wird, in dem die Feinreinigung des Abgasstroms erfolgt, und dass das Adsorbtionsmittel der zweiten Stufe (15) als Adsorbtionsmittel in der ersten Stufe (13) verwendet wird.

2. Verfahren nach Anspruch 1, **dadurch gekennzeichnet, dass** das eingesetzte Adsorptionsmittel (19) aus einem Granulat besteht, welches Calciumhydroxid und/oder Calciumcarbonat, Natriumcarbonat und/oder Natriumhydrogencarbonat und/oder Magnesiumoxid und/oder Magnesiumhydroxid enthält.

3. Verfahren nach Anspruch 1 oder 2, **dadurch gekennzeichnet, dass** das feste Adsorbens (19) in Form einer granulierten Schüttung, insbesondere mit einer Korngröße von 1 mm bis 20 mm und bevorzugt von 2 mm bis 8 mm, vorliegt.

4. Verfahren nach einem der vorhergehenden Ansprüche, **dadurch gekennzeichnet, dass** das feste Adsorbens (19) ein kohlenstoffhaltiges Additiv, insbesondere Aktivkohle und/oder Herdofenkoks, enthält, insbesondere mit einem Anteil von 0,1 bis 50 Gew.-%, vorzugsweise von 1 bis 35 Gew.-%.

5. Verfahren nach einem der vorhergehenden Ansprüche, **dadurch gekennzeichnet, dass** der Abgasstrom bei Eintritt in die erste Stufe des Adsorbers eine Temperatur zwischen 150°C und 450 °C aufweist.

6. Verfahren nach einem der Ansprüche 1 bis 5, **dadurch gekennzeichnet, dass** das Adsorbtionsmittel (19) diskontinuierlich oder kontinuierlich zunächst durch die zweite und anschließend durch die erste Stufe des Adsorbers geführt wird.

7. Verfahren nach einem der Ansprüche 1 bis 6, **dadurch gekennzeichnet, dass** die Verweilzeit des Granulates im Adsorber durch die Austragsmenge und Austragsgeschwindigkeit der Austragsorgane eingestellt wird.

8. Vorrichtung zur Reinigung von Schadstoffen aus einem Abgasstrom einer mit einem schwefelhaltigen Brennstoff betriebenen Brennkraftmaschine, insbesondere einer mit Schweröl betriebenen Schiffsbrennkraftmaschine, welche Brennkraftmaschine wenigstens ein Abgasrohr (10) aufweist, das von dem Abgas durchströmt wird, **dadurch gekennzeichnet, dass** in dem Abgasrohr (10) wenigstens eine Absperrklappe (12a, 12b) vorhanden ist, dass die Abgasrohrwandung (14) in einem ersten Bereich (13) in Strömungsrichtung (11) vor der Absperrklappe (12a) unter Bildung einer ersten Adsorbtionsstufe und in einem zweiten Bereich (15) in Strömungsrichtung (11) hinter der Absperrklappe (12b) unter Bildung einer zweiten Adsorbtionsstufe perforiert ist, dass die perforierten Bereiche von einem durchgängigen Adsorbenskanal (17) überdeckt sind, dass der Adsorbenskanal (17) von einem Strömungskanal (18) überdeckt ist, dessen innere und den Adsorbenskanal begrenzende Wandung (20) perforiert ist derart, dass das Abgas bei geschlossener Absperrklappe (12a, 12b) durch die Perforierung im ersten Bereich (13) nach außen durch den Adsorbenskanal (17) in den Strömungskanal (18) und von dort nach innen durch den Adsorbenskanal (17) und durch die Perforierung im zweiten Bereich (15) zurück in das Abgasrohr (10) in Strömungsrichtung (11) hinter der Absperrklappe (12b) geleitet wird.

9. Vorrichtung nach Anspruch 8, **dadurch gekennzeichnet, dass** das Abgasrohr (10) in der die Absperrklappe (12a, 12b) aufweisenden Zone (21) zwischen der ersten und zweiten Stufe nicht perforiert ist.

10. Vorrichtung nach Anspruch 8 oder 9, **dadurch gekennzeichnet, dass** die Außenwandung (20) des Adsorbenskanals (17) in dem der nicht perforierten Zone (21) des Abgasrohrs (10) entsprechenden Zone nicht perforiert ist.

11. Vorrichtung nach einem der Ansprüche 8 bis 10, **dadurch gekennzeichnet, dass** der erste und zweite Bereich des Abgasrohrs (10) entlang dessen Umfangs und in axialer Richtung perforiert sind und dass der Adsorbenskanal (17) und der Strömungskanal (18) die beiden Bereiche hülsenförmig umgeben.

12. Vorrichtung nach einem der Ansprüche 8 bis 11, **dadurch gekennzeichnet, dass** die beiden Bereiche (13, 15) und die Absperrklappe (12a, 12b) in einem vertikal verlaufenden Abschnitt des Abgasrohrs (10) angeordnet sind, und dass der Adsorbenskanal (17) von oben mit einem Adsorbtionsmittel (19) befüllbar ist und auf seiner unteren Seite wenigstens ein Austragsorgan (23) für das verbrauchte Adsorbtionsmittel aufweist derart, dass das Adsorbtionsmittel (19) aufgrund der Schwerkraft durch den Adsorbenskanal (17) transportiert wird.

13. Vorrichtung nach einem der Ansprüche 8 bis 12, **dadurch gekennzeichnet, dass** die die ersten und zweiten Bereiche des Abgasrohrs (10) umgebenden Volumen des Adsorbenskanals (17) im wesentlichen gleich groß sind.

14. Vorrichtung nach einem der Ansprüche 8 bis 13, **dadurch gekennzeichnet, dass** das Austragsorgan als Zellenradschleuse ausgebildet ist.

15. Vorrichtung nach einem der Ansprüche 8 bis 14, **dadurch gekennzeichnet, dass** in Strömungsrichtung zwischen dem ersten und zweiten Bereich zwei Absperrklappen (12a, 12b) vorhanden sind, die unter Bildung eines Bypasses geöffnet werden können.
